# EUROPEAN PATENT APPLICATION

(11) **EP 4 492 227 A1**
(43) Date of publication of application: **15.01.2025**
(21) Application number: 23787677.6
(22) Date of filing: 11.04.2023
(51) Int. Cl.: G06F 9/451

(54) **PROMPTING METHOD AND DEVICE**

(30) Priority: 11.04.2022 CN 202210377428
(71) Applicant: BEIJING YOUZHUJU NETWORK TECHNOLOGY CO. LTD., Beijing 101299 (CN)
(72) Inventor: ZHANG, Qinyuan, Beijing 100028 (CN); WANG, Qiuyu, Beijing 100028 (CN); XU, Liangcheng, Beijing 100028 (CN)
(74) Representative: Dentons UK and Middle East LLP
(86) International application number: PCT/CN2023/087540
(87) International publication number: WO 2023/198033

(57) **Abstract**

The present disclosure provides a method and a device for prompting, which relate to the technical field of computer software technology. The method comprises: determining whether target description information of a target video satisfies a target condition; and in response to a determination that the target description information satisfies the target condition, displaying prompt information for the target video, the prompt information being configured to prompt editing of the target description information. It can be seen that the target condition is a condition for displaying prompt information, thus when the prompt information is not displayed, it indicates that the target description information meets expectations. That is to say, in the present disclosure, the prompt information may be used to prompt a user to edit target description information of a video, so that the target description information meets the expectations, and thus any user may accurately grasp video content by means of the target description information meeting the expectation, and thus determine whether to watch the video or not, thereby facilitating in improving the user experience.

## Description

### CROSS REFERENCE TO RELATED APPLICATIONS

This application claims priority to Chinese Patent Application No. 202210377428.2, filed with the Chinese Patent Office on April 11, 2022, and entitled "METHOD AND DEVICE FOR PROMPTING", which is incorporated herein by reference in its entirety.

### FIELD

Embodiments of the present disclosure relate to the field of computer software technology, and in particular, to a method and device for prompting.

### BACKGROUND

With rapid development of software technology, a large number of applications emerge, and different applications may provide different service experiences for users. The video application is an application for providing video experiences to users, and the user may make a video, publish a video, play a video, and the like by using the video application.

In the related art, after a user has made a video, the video can be published. After the video is published, not only the user who publishes the video can play the video, but also other users can play the video. Specifically, in the process of playing the video, the application may display information related to the video on the video, including but not limited to: user information of the user who published the video, description information of the video, historical comment information about the video, historical playback information about the video, and the like.

### SUMMARY

Embodiments of the present disclosure provide a method and device for prompting.

According to a first aspect, an embodiment of the present disclosure provides a method for prompting, comprising:
determining whether target description information of a target video satisfies a target condition; and
in response to a determination that the target description information satisfies the target condition, displaying prompt information for the target video, the prompt information being configured to prompt editing of the target description information.

According to a second aspect, an embodiment of the present disclosure provides an apparatus for prompting, comprising:
a condition determining module, being configured to determine whether target description information of a target video satisfies a target condition; and
a prompt information displaying module, being configured to display prompt information for the target video, in response to a determination that the target description information satisfies the target condition, the prompt information being configured to prompt editing of the target description information.

According to a third aspect, an embodiment of the present disclosure provides an electronic device, comprising: at least one processor and a memory;
**the** memory stores a computer execution instruction; and
the at least one processor executes the computer execution instruction stored in the memory, so that the electronic device implements the method according to the first aspect.

According to a fourth aspect, an embodiment of the present disclosure provides a computer readable storage medium; the computer readable storage medium stores a computer execution instruction therein, when executing the computer execution instruction, the processor implements the method according to the first aspect.

According to a fifth aspect, an embodiment of the present disclosure provides a computer program for implementing the method according to the first aspect.

According to a sixth aspect, an embodiment of the present disclosure provides a computer program product, comprising a computer program, wherein the computer program implements the method according to the first aspect when being executed by a processor.

The embodiments of the present disclosure provide a method and device for prompting. The method comprises: determining whether target description information of a target video satisfies a target condition; and in response to a determination that the target description information satisfies the target condition, displaying prompt information on the target video, the prompt information being configured to prompt editing of the target description information. It can be seen that the target condition is a condition for displaying prompt information, and when the prompt information is not displayed, it indicates that the target description information meets expectations. That is to say, in the present disclosure, the prompt information may be used to prompt a user to edit target description information of a video, so that the target description information meets the expectations, and thus any user may accurately grasp video content by means of the target description information meeting the expectation, and thus determine whether to watch the video or not.

### BRIEF DESCRIPTION OF THE DRAWINGS

**In** order to more clearly illustrate the technical solutions in the embodiments of the present disclosures or prior art, the following will be a brief introduction to the accompanying drawings required for the description of the embodiments or the prior art. Obviously, the accompanying drawings in the following description relate to some embodiments of the present disclosure. For those of ordinary skill in the art, other drawings can be obtained according to these drawings without creative labor.
FIG. 1 is a schematic diagram of an application scenario to which an embodiment of the present disclosure is applicable;
FIG. 2 is a flowchart of steps of a method for prompting provided by an embodiment of the present disclosure;
FIG. 3 and FIG. 4 are schematic diagrams illustrating two kinds of display of the prompt information provided by embodiments of the present disclosure;
FIG. 5 is a structural schematic diagram of a video publication interface provided by an embodiment of the present disclosure;
FIG. 6 is a structural block diagram of an apparatus for prompting provided by an embodiment of the present disclosure;
FIG. 7 is a structural block diagram of an electronic device provided by an embodiment of the present disclosure,
FIG. 8 is a structural block diagram of another electronic device provided by an embodiment of the present disclosure.

### DETAILED DESCRIPTION

In order to make objects, technical solutions and advantages of the embodiments of the present disclosure more apparent, the technical solutions in the embodiments of the present disclosure will be described below clearly and completely in connection with the drawings in the embodiments of the present disclosure. Obviously, the described embodiments are only a part but not all of the embodiments of the present disclosure. Based on the embodiments of the present disclosure, all other embodiments obtained by those skilled in the art without creative efforts shall fall within the scope of protection of the present disclosure.

In the prior art, there is a problem that the user experience is poor. To solve the foregoing technical problem, the inventor analyzed the video playback solution in the prior art, and found that one of the reasons why the foregoing technical problem exists is that the played video may have description information not meeting a condition. In this case, a user watching the video may accurately know video content only after watching the complete video, but cannot accurately know main content of the video by using description information of the video, resulting in poor user experience. In addition, before playing the video, the user cannot accurately select, according to the description information of the video, whether to play the video or not, resulting in poor user experience as well.

In order to solve the above technical problems, the embodiments of the present disclosure consider minimizing occurrence of the situation that the described description information does not meet the condition. However, in a practical scenario, the description information of the video is not necessary information of the video, and the fact that the description information does not meet a condition will not affect normal playback of the video. Accordingly, in order to prevent description information from affecting normal publication of a video, when publishing the video, a condition that the description information does not conform with the condition is not taken as a condition for successfully publishing the video. That is to say, even if the description information of the video does not comply with the condition, the video can still be published successfully.

Based on the above consideration, the embodiments of the present disclosure may determine whether the description information of the video satisfies a target condition. If the description information does not satisfy the target condition, the user who publishes the video may be prompted to edit the description information, so that the description information satisfies the target condition. Thus, a situation that the description information does not conform with expectation can be avoided as far as possible, thereby improving the user experience.

The technical solutions of the embodiments of the present disclosure and how to solve the above technical problem by the technical solutions of the present disclosure will be described in detail below with reference to specific embodiments. Hereinafter, several specific embodiments may be combined with each other, and the same or similar concepts or procedures may not be repeated in certain embodiments. Embodiments of the present disclosure will be described below with reference to the accompanying drawings.

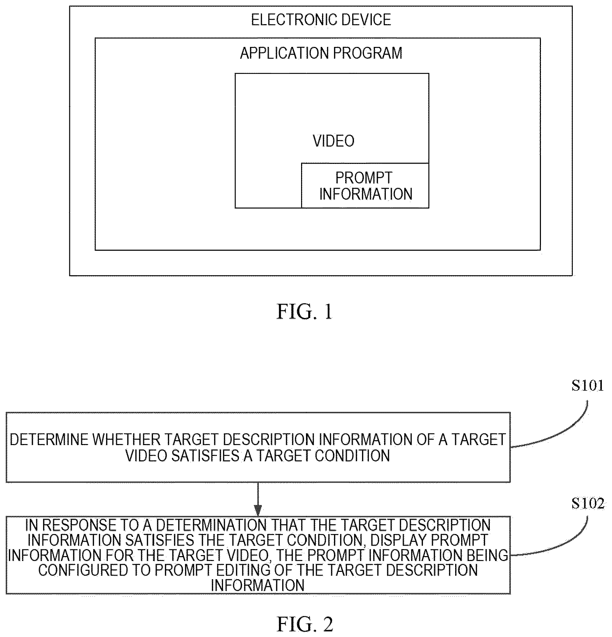

FIG. 1 is a schematic diagram of an application scenario to which an embodiment of the present disclosure is applicable. Referring to FIG. 1, an application for providing video services runs on an electronic device. The electronic device is any device that can run an application, for example, a mobile phone, a tablet computer, or a personal computer.

The above application can play a video, so that the state of the video may include, but is not limited to, an un-displayed state and a display state, and the display state may include a to-be-played state, a video playback state, and a paused state. In the to-be-played state, the video has not been played yet, but a thumbnail of the video may be displayed on the screen, so that the user clicks the thumbnail to start playing the video, and then the video is in the playback state. When the video is in the playback state, the user may further perform an operation on the video, so that the video is switched to the paused state. Certainly, the user may also switch the video from the paused state to the playback state.

The above application may be any application that provides a video, and the video is configured to recommend a display object in the video. The display object may be a commodity or an object other than a commodity.

The following takes a commodity as an example for description. The application may be a short video application for shopping, and the corresponding video may be a short shopping video. After making a short shopping video on the short video application, the user may publish the short shopping video, so that any user of the short video application can watch the short shopping video.

When the user who published the short shopping video enters a video management interface, the short shopping video may be displayed in the form of a thumbnail, that is, the video is in a to-be-played state. The user may operate the thumbnail of the short shopping video to start playing the short shopping video so that the short shopping video is in a playback state. In the process of the user watching the short shopping video, the short shopping video may be paused, so that the short shopping video is in the paused state. Of course, the user may also re-operate the short shopping video in the paused state so that it is in the playback state again.

When other users of the short video application refresh the short shopping video, the playback of the short shopping video can be automatically started so that it is in the playback state. In the process that another user watches the short shopping video, the short shopping video may be paused, so that the short shopping video is in the paused state. Of course, the other user may also operate the short shopping video in the paused state again, so that the short shopping video is in the playback state again.

It can be seen that, both the user who published the short shopping video and other users can pause or replay the short shopping video.

In the embodiments of the present disclosure, the prompt information may be displayed when the video is in a display state. Referring to FIG. 1, the prompt information may be superimposed and displayed on a part of the video. Of course, the prompt information may also be displayed independently around the video. The embodiments of the present disclosure do not limit the positional relationship between the prompt information and the video.

Of course, the application on the electronic device may be understood as a client, which corresponds to a remote server. The client may interact with a server to provide video services. Embodiments of the present disclosure do not involve interaction with a server.

FIG. 2 is a flowchart of steps of a method for prompting according to an embodiment of the present disclosure, which may be applied to the above electronic device. As shown in FIG. 2, the method for prompting includes:
S101: determining whether target description information of a target video satisfies a target condition.

Herein, the target video may be any video in an application program, and the target description information may be any type of description information of the target video. The description information of the target video may include the following a plurality of types of description sub-information: a resource link of a display object in the target video, a description text of the display object, and a picture of the display object.

It can be seen from the foregoing description that, the target video in the embodiments of the present disclosure is configured for recommending a display object in the target video, and the display object may be a commodity for sale or another object other than the commodity. Thus, the above resource link is an interface address for providing detail information of the display object, and the interface address commonly used may be a uniform resource locator (URL).

When display objects in target videos are different, the functions of corresponding resource links may be different.

For example, when a display object in a target video is a commodity, the resource link may be a purchase interface address of the commodity, and a user may click the purchase interface address to enter a corresponding purchase interface, and the purchase interface includes detail information of the commodity and an operation control for purchasing the commodity. The user may view detail information of the commodity in the purchase interface to purchase the commodity.

In another example, when a display object in a target video is any object other than the commodity, the resource link is a viewing interface address of the object, and the user may click the viewing interface address to enter the corresponding viewing interface. For example, when the object is a novel, the viewing interface may be a display interface for the novel to display detail content of the novel. When the object is an online teaching video, the viewing page is a playback interface of the online teaching video to play the online teaching video.

The foregoing description is used for describing a display object by using text. Specifically, when the display object is a commodity, the description text is configured for describing an appearance, a use method, an effect, and the like of the commodity. When the display object is a novel, the description text is configured to introduce main characters, main plot, and the like of the novel. When the display object is an online teaching video, the description text may be configured for providing an introduction to a teacher, a start time of teaching, a duration of teaching, main content of teaching, and the like.

The picture of the display object may provide an introduction to the display object through picture content. Specifically, when the display object is a commodity, the picture of the display object may be a picture that includes the appearance of the commodity. When the display object is a novel, the picture of the display object may include main characters of the novel, a novel cover, and the like. When the display object is an online teaching video, the picture of the display object may include a teacher portrait, a teaching video cover, or the like.

S102: in response to a determination that the target description information satisfies the target condition, displaying prompt information for the target video, the prompt information being configured to prompt editing of the target description information.

The target condition is a condition for displaying prompt information. Specifically, when the target description information satisfy the target condition, it indicates that the target description information does not meet expectations. In this case, the prompt information is displayed to prompt the user to edit the target description information until the target description information does not satisfy the target condition. When the target description information does not satisfy the target condition, it indicates that the target description information meets the expectation, and at this time, the prompt information is not displayed. Of course, when the target conditions are different, the target description information needs to be edited differently.

For example, the target description information may be a description text, so that the target condition may be that the word number of the description text is smaller than a predetermined word number threshold. If the word number of the description text is smaller than the predetermined word number threshold, it indicates that the target description information is incomplete. For example, when the display object is a commodity, it indicates that the appearance, use method, effect, and the like of the commodity are not completely described. When the display object is a novel, it indicates that the introduction to the main characters, the main plot, etc. of the novel is incomplete, and when the display object is an online teaching video, it indicates that the introduction to the teacher, the start time of teaching, the duration of teaching, or the main content of teaching is incomplete. In this case, the editing that needs to be performed by the user is to supplement the target description information until the word number of the description text is greater than or equal to the predetermined word number threshold.

In another example, the target description information may be a picture of the display object, so that the target condition may be that a picture format of the picture is a target format, which indicates that the target description information needs to be modified. The target format is a format that does not conform to an expected format. For example, the expected format may be JPG, but the target format is MPEG.

In another example, the target description information may be a resource link, so that the target condition may be that the resource link does not exist. In this scenario, if the resource link does not exist, it indicates that the resource link needs to be supplemented.

It should be noted that, in the embodiment of the present disclosure, the target video may be a published video, and the published video is a video to be displayed that has been published successfully and can be watched by other users. In this scenario, if the target description information satisfies the target condition, the user experience of other users in using the target video will be affected.

In order to solve the above problem, in the embodiments of the present disclosure, a user having a permission of the target video may be prompted to edit the target description information through the above prompt information. Here, the user having the permission may include, but are not limited to, a user who published the target video, and other users who have a modification permission. The user who published the target video corresponds to a publication account of the target video, and the other users having the modification permission correspond to accounts having the modification permission.

In order to achieve the above purpose, when displaying the prompt information, it is also possible to determine whether the current login account corresponds to the user having the permission. Specifically, if the current login account is the publication account or an account having the modification permission, the prompt information may be displayed. Otherwise, the prompt information is not displayed.

Herein, the current login account is configured for representing an identity of a user requesting to display the video, and the publication account of the target video is configured for representing the identity of the user who published the target video. When the current login account is consistent with the publication account, it represents that the user requesting to display the video is the user who published the video, that is, the application is in a host state. When the current login account is inconsistent with the publication account, it represents that the user requesting to display the video is not the user who published the video, that is, the application program is in a guest state.

The target video may be displayed in the following pages: a video playback page and a video management page, wherein the video playback page is configured for playing the following videos: at least one video published by the current login account, and a video published by an account other than the current login account. The video management page is configured for managing the following videos: at least one video published by the current login account.

It can be seen that, the video playback page may not only play videos published by the user himself/herself, but may also play videos published by other users. A video management page is an interface for a user to manage videos published by himself/herself. Accordingly, in the embodiments of the present disclosure, prompt information may be displayed when target videos are displayed on the above two interfaces, so that the user can view the prompt information in various manners, thereby improving the probability of the user in editing description information.

The prompt information may be displayed in anyway, such as text, an image, or the like. For example, when the display object is a commodity and the target condition is that the word number of the text description is smaller than a predetermined word number threshold, the prompt information may be a text description of "the word number of a note of the commodity is insufficient", or any type of images indicating that the word number of the note is insufficient. The prompt information may be displayed in a sub-region in the playback interface, and the sub-region may be a blank sub-region and a background image sub-region.

Specifically, the blank sub-region may be a region in the playback interface outside a region where the target video is located, for example, the blank sub-region is provided around the target video to display the prompt information, wherein around the target video may include at least one of the following: an upper side, a lower side, a left side and a right side of the target video.

The background image may also be understood as a back view image, which is relative to the foreground image. For example, when a commodity is shot, an environment image behind the commodity is the back view image, which corresponds to a sub-region of the background image, and the commodity image is the foreground image.

It can be seen that, no matter whether the prompt information is displayed in the blank sub-region or the background image sub-region, the prompt information can be prevented from affecting the user to watch the video, which helps to improve the user experience.

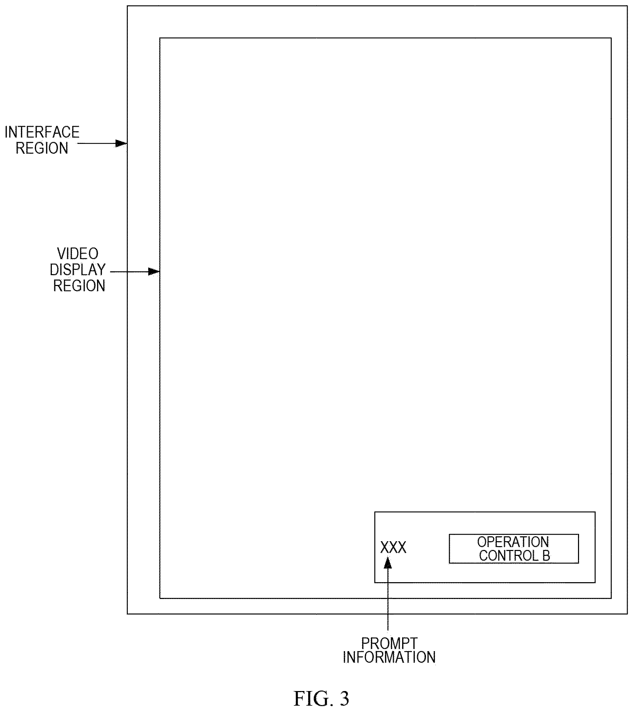

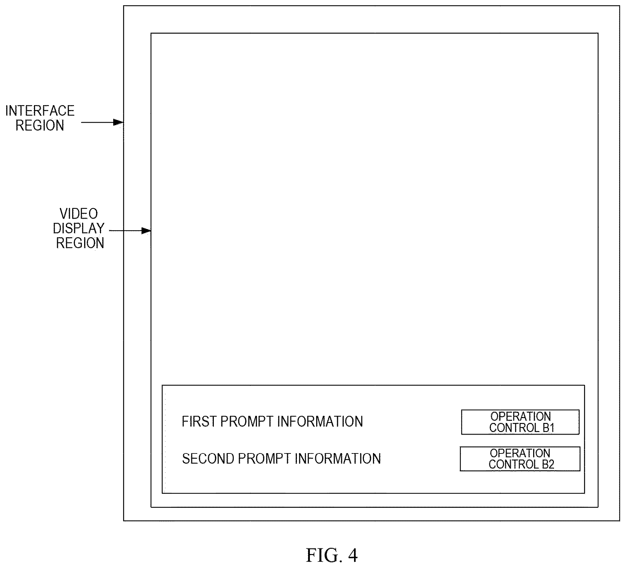

In the embodiments of the present disclosure, the prompt information may be a piece of information for all the description information satisfying the target condition, or the prompt information may include prompt sub-information for each type of description sub-information. FIG. 3 and FIG. 4 are schematic diagrams illustrating two kinds of display of the prompt information provided by embodiments of the present disclosure, which respectively illustrate one piece of prompt information and a plurality of pieces of prompt sub-information. Referring to FIG. 3 and FIG. 4, an interface region is configured to display an interface of an application, and a video display region is configured to display a target video. The prompt information is superimposed on the target video.

Referring to FIG. 3, the prompt information may be a piece of prompt information for all pieces of target description information satisfying the target condition. For example, the prompt information in FIG. 3 may be "Description information does not meet the expectation". That is to say, no matter whether the description information includes a plurality of types of description sub-information or not, the embodiments of the present disclosure can display a piece of prompt information without distinguishing the description sub-information. In this way, when there are a large number of pieces of description sub-information to be edited, only one piece of prompt information is displayed, thereby reducing the coverage area of the prompt information on the video and reducing the impact on the video display.

In addition, the prompt information shown in FIG. 3 may also be displayed with the number or proportion of pieces of the description sub-information to be edited. For example, if the total number of types of the description sub-information is 2, and one type of the description sub-information needs to be edited, it may be displayed in the prompt information that the description sub-information to be edited is 1/2, indicating that in the two types of the description sub-information, one type of the description sub-information needs to be edited. In this way, more accurate information may be provided to the user by using the ratio or the number, so that the user knows the number of pieces of the description sub-information to be edited.

Referring to FIG. 4, description information satisfying the target condition includes two types of description sub-information: first description sub-information and second description sub-information, so that the prompt information includes first prompt sub-information and second prompt sub-information. The first prompt sub-information is prompt sub-information for the first description sub-information, and the second prompt sub-information is prompt sub-information for the second description sub-information. For example, the first description sub-information may be a resource link of a display object, the first prompt sub-information may be "Link for commodity is not added"; and the second description sub-information may be a text description, the second prompt sub-information may be "Note for the commodity is insufficient". In this way, more detail prompt information can be provided to a user, that is, the user can be prompted with a specific type of description information that needs to be edited, which helps to further improve the user experience.

It can be seen that, in FIG. 4, prompt sub-information is displayed for each type of description sub-information, so that the user can determine the specific type of the description sub-information to be edited. Displaying the specific type of the description sub-information to be edited may provide more accurate information to the user as compared with displaying only the number of pieces of description sub-information that needs to be edited. It should be noted that the prompt solutions corresponding to FIG. 3 and FIG. 4 may also be used in combination.

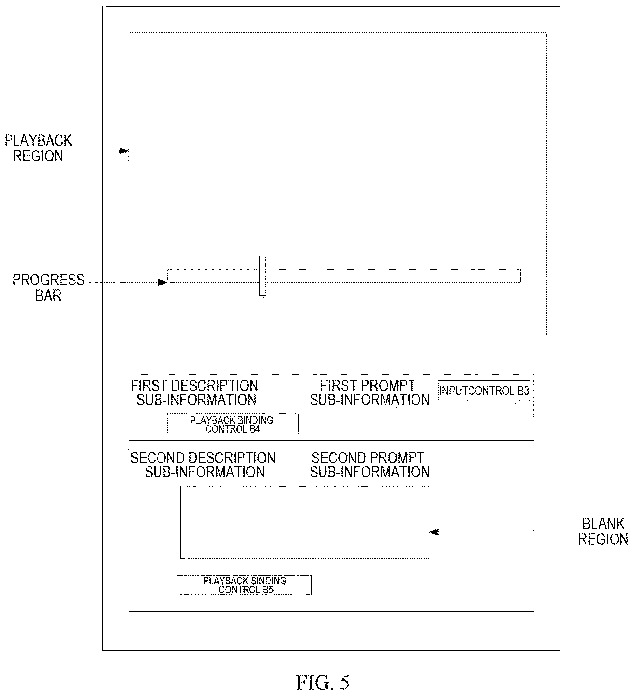

Optionally, the prompt information is further displayed with an operation control B, where the operation control B is configured to jump to a video publication interface for editing the description information. Specifically, when the user operates a target operation control, the application may jump to the video publication interface for editing the description information as shown in FIG. 5. In this way, the user neither needs to enter the video management interface first, nor needs to select the video with description information needed to be edited from the video management interface. Instead, by using the operation control, the user may quickly enter the video publication interface for editing the description information, thus operation steps required by the user for editing description information can be reduced, and the complexity of the user operation is reduced. Thus, the time required by the user for editing the description information is shortened, and the operation efficiency of the user is improved.

There may be one or more operation controls. Referring to FIG. 3, there is one operation control. It can be understood that, even if a plurality of types of description sub-information need to be edited, only one piece of prompt information may be displayed in FIG. 3, instead of displaying a plurality of pieces of corresponding prompt sub-information for respective types of description sub-information. In this case, there is also one corresponding operation control without distinguishing the plurality of pieces of prompt sub-information. In this way, in the case where there are a large number of pieces of description sub-information that need to be edited, the coverage area of the operation control on the video is reduced, and the influence on the video display is reduced.

When there are a plurality of operation controls, each operation control corresponds to one piece of prompt sub-information. Since each piece of prompt sub-information corresponds to one type of description sub-information, each operation control corresponds to one type of description sub-information as well. Referring to FIG. 4, the description information needed to be edited includes the first description sub-information and the second description sub-information, which respectively correspond to the first prompt sub-information and the second prompt sub-information, thus the operation controls may be B1 and B2. B1 corresponds to the first prompt sub-information, and B2 corresponds to the second prompt sub-information. In this way, one operation control may be provided for each type of the description sub-information, and after a user clicks a target operation control, a video publication interface may be jumped to and the user may locate to an input region for the corresponding description sub-information. Thus, the user does not need to slide to an input region for the description sub-information in the video publication interface, thereby reducing operation steps of the user, further reducing complexity of user operations and improving efficiency of the user in editing description information.

Herein, an operation prompt may further be displayed on the operation control, so as to prompt the user to perform an operation on the operation control. The operation prompt may be associated with a target condition, and when the target condition is that the description sub-information is incomplete, the operation prompt may be a word such as "improving" or "adding". Of course, the corresponding prompt information may be words such as "incomplete" or "not added".

After the operation controls are displayed in FIG. 3 or FIG. 4, the user may perform an operation on any one of the target operation controls. For the target operation control B in FIG. 3, a processing process may include: after the user performs an operation on the target operation control B firstly, receiving an operation instruction for the target operation control, then, in response to the operation instruction, displaying a video publication interface, the video publication interface comprising: an input region for each type of description sub-information, prompt sub-information corresponding to each type of description sub-information and editing requirement information of each type of description sub-information, the editing requirement information being configured for reflecting target sub-conditions corresponding to the description sub-information.

Herein, the video publication interface may be configured for editing description sub-information, and accordingly, the video publication interface at least includes an input region for the description sub-information. The input region for the description sub-information is associated with the type of the description sub-information. For example, for an image, the input region may be a region where the input control is located. For another example, for a text description, the input region may be a blank region.

FIG. 5 is a schematic diagram of a video publication interface provided by an embodiment of the present disclosure. Referring to FIG. 5, the first description sub-information and the second description sub-information are shown.

For the first description sub-information, since the first description sub-information is description sub-information of a picture type, its input region is a region where the input control B3 is located. After the user clicks B3, a to-be-input picture may be selected from a pop-up window displayed as the edited first description sub-information.

For the second description sub-information, since the second description sub-information is a text description, its input region is a blank region. The user may input a text description in the blank region as the edited second description sub-information.

In addition, in FIG. 5, the corresponding first prompt sub-information and second prompt sub-information are displayed for the first description sub-information and the second description sub-information, respectively. In this way, in the video publication interface, the user can be prompted with the description sub-information to be edited, thereby further improving the user experience.

Finally, in the embodiment of the present disclosure, corresponding editing requirement information may also be displayed for the description sub-information, and the editing requirement information is configured for reflecting a target sub-condition corresponding to the description sub-information. For example, when the target sub-condition is that the word number is less than the predetermined word number threshold 50, the editing requirement information may be "The word number is less than 50" or "The word number needs to be greater than 50". In this way, the user can be better prompted to edit the description sub-information, and thus the user may edit the description sub-information according to the editing requirement information, so that the edited description sub-information conforms with the expectation.

When there are a plurality of operation controls, the target input region in the video publication interface may be used as an editing region when displaying the video publication interface. The target input region is an input region for description sub-information corresponding to the target operation control.

Since each operation control corresponds to a type of description sub-information to be edited, an input region for editing the description sub-information may be directly located, so that the user edits the description sub-information through the input region. In this way, the user does not need to slide in the video publication interface to the input region of the description sub-information to be edited, which helps to reduce the operation complexity of the user and thus improves the efficiency of a user in editing the description information.

Of course, no matter whether the user enters the video publication interface through the operation control B in FIG. 3, or enters the video publication interface through the operation control B1 or B2 in FIG. 4, the user may edit the description sub-information in the input region of the video publication interface. After editing the description sub-information, the description sub-information needs to be processed through the following steps: first, receiving the description sub-information edited in the input region; then, when the description sub-information does not satisfy the above target sub-condition, it represents that the description sub-information does not need to be continuously edited, so that a display state of the prompt sub-information corresponding to the description sub-information can be updated. Different display states represent whether the target sub-condition is satisfied or not. In this way, the user can more accurately locate the description sub-information to be edited according to the display state of the prompt sub-information. In addition, the user may also determine, according to the display state of the prompt sub-information, whether the editing of the description sub-information is completed, which further improves the user experience.

Optionally, as shown in FIG. 5, the video publication interface further includes a playback region of the target video, so that the target video can be played in the playback region. The playback region may include a playback control component configured to control the playback of the target video.

Herein, the playback control may include, but is not limited to, pausing the playback, starting the playback, accelerating the playback, decelerating the playback, and the like. According to the embodiments of the present disclosure, in a process of a user editing description sub-information of a video, a target video can be played through a playback region, so as to assist the user in editing the description sub-information through the played target video, thereby improving the content relevance between the description sub-information edited by the user and the target video, and improving the accuracy of the description sub-information in describing the target video.

In addition, by playing the target video, more ideas can be provided to the user so as to edit the description sub-information, thereby avoiding the user from thinking about the content of the description sub-information that needs to be edited, and thus saving the user's time.

Optionally, the user may bind the bound description information to the target playback fragment in the target video in the video publication interface, so as to quickly play the target video. Specifically, first, a playback binding operation on the bound description information in the video publication interface is received, wherein the bound description information is any of pieces of description sub-information; then, in response to the playback binding operation, a correspondence between a target playback fragment of the target video and the bound description information is established, so as to play the target playback fragment in response to an operation instruction for the bound description information.

It can be understood that, when the user performs a playback binding operation, the target video may be in a playback state. The description sub-information of the target video may be created by a user, and the created description sub-information may correspond to a playback binding control. The user may perform an operation on the playback binding control, and the operation may be understood as a playback binding operation. For example, as shown in FIG. 5, the first description sub-information corresponds to a playback binding control B4, and the second description sub-information corresponds to a playback binding control B5.

After the correspondence between the target playback fragment and the bound description information is established by using the playback binding control, when playing the target video, any user may perform an operation on the bound description information to start the playback from the target playback fragment corresponding to the bound description information.

Herein, the target playback fragment may include one of the following: a current playback fragment, a fragment corresponding to the time input by the user, and a fragment corresponding to the time when the user dragging of the progress bar shown in FIG. 5 is ended.

After the foregoing correspondence is established, a mark may be displayed at a position corresponding to the target playback fragment on the progress bar shown in FIG. 5. After the user clicks the mark, the target playback fragment may be jumped to and the playback is started, and the description sub-information corresponding to the target playback fragment is displayed.

It should be noted that the user may perform the foregoing playback binding operation on one or more pieces of description sub-information, so that there may be one or more pieces of the foregoing bound description information. When there are a plurality of pieces of bound description information, there are also a plurality of foregoing correspondences.

It can be seen that, in the embodiment of the present disclosure, jumping playback of the target video may be implemented through the correspondence between the target playback fragment and the bound description information, which helps any user who is watching the target video to quickly locate the fragment to be watched, thereby saving the user's time and improving the user experience.

In conclusion, the embodiments of the present disclosure may be applied to a video for introducing a display object, and the target description information can be understood as any piece of description information of the display object. Thus, the user can be prompted, by means of the prompt information, to edit the target description information, so that the description of the display object is complete and sufficient, and other users can be facilitated to accurately learn the description object by means of the complete and sufficient description.

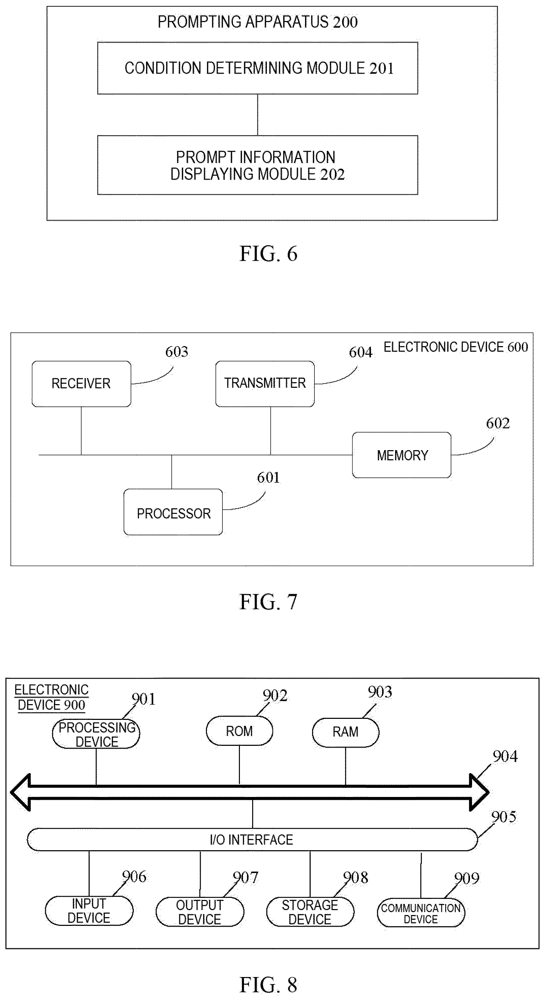

Corresponding to the method for prompting in the foregoing embodiments, FIG. 6 is a structural block diagram of an apparatus for prompting according to an embodiment of the present disclosure, which is applied to an electronic device. For ease of description, only parts related to the embodiments of the present disclosure are shown. Referring to FIG. 6, the prompting apparatus 200 includes a condition determining module 201 and a prompt information displaying module 202.

Herein, the condition determining module 201 is configured to determine whether the target description information of the target video satisfies a target condition.

The prompt information displaying module 202 is configured to display prompt information for the target video, if the target description information satisfies the target condition, the prompt information being configured to prompt editing of the target description information.

Optionally, the target description information includes at least one type of description sub-information as follows: a resource link of a display object in the target video, a description text of the display object and a picture of the display object; and the target condition comprises at least one of the following: the resource link does not exist, the word number of the description text is less than a predetermined word number threshold, and a picture format of the picture is a target format.

Optionally, the prompt information displaying module 202 is further configured to:
display the prompt information in a sub-region of the target video, wherein the sub-region comprises one of the following: a blank sub-region and a background image sub-region.

Optionally, the prompt information includes at least one piece of prompt sub-information, each type of the description sub-information corresponds to one piece of prompt sub-information, and the prompt information displaying module 202 is further configured to:
display the prompt sub-information corresponding to each of the at least one type of description sub-information.

Optionally, the target condition includes target sub-conditions respectively corresponding to respective pieces of the description sub-information. The apparatus further includes:
an operation instruction receiving module configured to receive an operation instruction for a target operation control, the target operation control being a control displayed for the prompt information.
a video publication interface displaying module configured to display a video publication interface, the video publication interface comprising: an input region for each type of the description sub-information, the prompt sub-information corresponding to each type of the description sub-information and editing requirement information corresponding to each type of the description sub-information, the editing requirement information being configured to reflect the target sub-conditions corresponding to the description sub-information.

Optionally, there are a plurality of operation controls, and each of the operation controls corresponds to one piece of the prompt sub-information.

Optionally, the video publication interface displaying module is further configured to:
display the video releasing interface, and take a target input region in the video publication interface as an editing region, the target input region being an input region for description sub-information corresponding to the target operation control.

Optionally, the apparatus further includes:
a description sub-information receiving module configured to receive the description information that is input into the input region; and
a display ending module configured to update a display state of prompt sub-information corresponding to the description sub-information when the description sub-information does not satisfy the corresponding target sub-condition.

Optionally, the video publication interface further includes a playback region for the target video, and the video publication interface displaying module is further configured to:
play the target video in the playback region, wherein the playback region comprises a playback control component, and the playback control component being configured to control playback of the target video.

Optionally, the apparatus further includes:
a binding operation receiving module configured to receive a playback binding operation for bound description information in the video publication interface, wherein the bound description information is any piece of the description sub-information.
a correlation establishment module configured to establish, in response to the playback binding operation, a correspondence between a target playback fragment of the target video and the bound description information, so as to play the target playback fragment in response to an operation instruction for the bound description information.

The apparatus for prompting provided in this embodiment may be used to execute the technical solution of the method embodiment shown in FIG. 2. Implementation principles and technical effects of the apparatus for prompting are similar to those of the method embodiment shown in FIG. 2, and are not repeatedly described herein in this embodiment.

FIG. 7 is a structural block diagram of an electronic device 600 according to an embodiment of the present disclosure. The electronic device 600 includes a memory 602 and at least one processor 601.

Herein, the memory 602 stores a computer execution instruction.

The at least one processor 601 executes the computer execution instruction stored in the memory 602, so that the electronic device 601 implements the above method in FIG. 2.

In addition, the electronic device may further include a receiver 603 and a transmitter 604, where the receiver 603 is configured to receive information from other apparatuses or devices and forward the information to the processor 601, and the transmitter 604 is configured to transmit the information to the other apparatuses or devices.

Further, FIG. 8 is a structural block diagram of another electronic device provided in an embodiment of the present disclosure. The electronic device 900 may be a terminal device. The terminal device may include but is not limited to mobile terminals such as mobile phones, laptops, digital broadcast receivers, Personal Digital Assistants (PDAs for short), tablet computers (PADs for short), portable multimedia players (PMPs for short), car-mounted terminals (such as car navigation terminals), etc. and fixed terminals such as digital televisions (TV), desktop computers, etc. The electronic device shown in FIG. 8 is only an example and should not bring any limitation on the functionality and scope of use of the embodiment of the present disclosure.

As shown in FIG. 8, the electronic device 900 may include a processing device (such as a central processing unit, graphics processing unit, etc.) 901, which may perform various appropriate actions and processes based on programs stored in Read-Only Memory (ROM) 902 or loaded from storage device 908 into Random Access Memory (RAM) 903. In the RAM 903, various programs and data necessary for the operation of the electronic device 900 are also stored. The processing device 901, ROM 902, and RAM 903 are connected to each other through a bus 904. An Input/Output (I/O) interface 905 is also connected to the bus 904.

Typically, the following devices can be connected to I/O interface 905: input devices 906 including, for example, touch screens, touchpads, keyboards, mice, cameras, microphones, accelerometers, gyroscopes, etc.; output devices 907 including liquid crystal displays (LCDs), speakers, vibrators, etc.; storage devices 908 including magnetic tapes, hard disks, etc.; and a communication device 909. The communication device 909 may allow the electronic device 900 to communicate with other devices wirelessly or wirelessly to exchange data. Although FIG. 8 shows an electronic device 900 with a plurality of devices, it shall be understood that it is not required to implement or have all of the devices shown. More or fewer devices can be implemented or provided instead.

In particular, according to embodiments of the present disclosure, the process described above with reference to the flowchart can be implemented as a computer software program. For example, an embodiment of the present disclosure includes a computer program product that includes a computer program carried on a computer-readable medium, where the computer program includes program code for performing the method shown in the flowchart. In such an embodiment, the computer program can be downloaded and installed from a network through the communication device 909, or installed from the storage device 908, or installed from the ROM 902. When the computer program is executed by the processing device 901, the above functions defined in the method of the embodiment of the present disclosure are performed.

It should be noted that the computer-readable medium described above can be a computer-readable signal medium or a computer-readable storage medium, or any combination thereof. The computer-readable storage medium can be, for example, but not limited to, an electrical, magnetic, optical, electromagnetic, infrared, or semiconductor system, apparatus, or device, or any combination thereof. Specific examples of computer-readable storage media may include but are not limited to: an electrical connection with one or more wires, a portable computer disk, a hard disk, random access memory (RAM), read-only memory (ROM), an erasable programmable read-only memory (EPROM), an optical fiber, a portable compact disk read-only memory (CD-ROM), an optical storage device, a magnetic storage device, or any suitable combination thereof. In the present disclosure, a computer-readable storage medium may be any tangible medium containing or storing a program that can be used by an instruction execution system, apparatus, or device, or can be used in combination with an instruction execution system, apparatus, or device. In the present disclosure, a computer-readable signal medium can include a data signal propagated in baseband or as part of a carrier wave, which carries computer-readable program code therein. Such propagated data signals may take many forms, including but not limited to electromagnetic signals, optical signals, or any suitable combination thereof. A computer-readable signal medium may also be any computer-readable medium other than a computer-readable storage medium, which can send, propagate, or transmit programs for use by or in conjunction with instruction execution systems, apparatus, or devices. The program code contained on the computer-readable medium may be transmitted using any suitable medium, including but not limited to: wires, optical cables, radio frequency (RF), etc., or any suitable combination thereof.

The computer-readable medium can be included in the electronic device, or it can exist alone without being assembled into the electronic device.

The above-mentioned computer-readable medium carries one or more programs, and when the above-mentioned one or more programs are executed by the electronic device, the electronic device implements the method as illustrated in the above embodiments.

Computer program codes for performing the operations of the present disclosure may be written in one or more programming languages or a combination thereof, including Object Oriented programming languages - such as Java, Smalltalk, C++, and also conventional procedural programming languages - such as "C" or similar programming languages. The program code may be executed entirely on the user's computer, partially executed on the user's computer, executed as a standalone software package, partially executed on the user's computer and partially on a remote computer, or entirely on a remote computer or server. In the case of involving a remote computer, the remote computer may be any kind of network - including local area network (LAN for short) or wide area network (WAN for short) - connected to the user's computer, or may be connected to an external computer (e.g., through an Internet service provider to connect via the Internet).

The flowcharts and block diagrams in the accompanying drawings illustrate the architecture, functions, and operations of possible implementations of the system, method, and computer program product according to various embodiments of the present disclosure. In this regard, each block in a flowchart or block diagram may represent a module, program segment, or portion of code that contains one or more executable instructions for implementing a specified logical function. It should also be noted that in some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

The units described in the embodiments of the present disclosure may be implemented by means of software or hardware, and the name of the unit does not constitute a limitation on the unit itself in a certain case, for example, a first obtaining unit may also be described as "a unit for obtaining at least two internet protocol addresses".

The functions described herein above can be performed at least in part by one or more hardware logic components. For example, without limitation, exemplary types of hardware logic components that may be used include: Field Programmable Gate Arrays (FPGAs), Application Specific Integrated Circuits (ASICs), Application Specific Standard Parts (ASSPs), System on Chip (SOCs), Complex Programmable Logic Devices (CPLDs), and so on.

In the context of this disclosure, a machine-readable medium can be a tangible medium that may contain or store programs for use by or in conjunction with instruction execution systems, apparatuses, or devices. A machine-readable medium may be a machine-readable signal medium or a machine-readable storage medium. A machine-readable medium may include, but are not limited to, electronic, magnetic, optical, electromagnetic, infrared, or semiconductor systems, apparatuses, or devices, or any suitable combination thereof. Specific examples of the machine-readable storage medium may include electrical connections based on one or more wires, portable computer disks, hard disks, random access memory (RAM), read-only memory (ROM), erasable programmable read-only memory (EPROM or flash memory), optical fibers, convenient compact disk read-only memory (CD-ROM), optical storage devices, magnetic storage devices, or any suitable combination thereof.

In a first example of the first aspect, an embodiment of the present disclosure provides a method for prompting, comprising:
determining whether target description information of a target video satisfies a target condition; and
in response to a determination that the target description information satisfies the target condition, displaying prompt information for the target video, the prompt information being configured to prompt editing of the target description information.

Based on the first example of the first aspect, in a second example of the first aspect, the target description information comprises at least one type of description sub-information as follows: a resource link of a display object in the target video, a description text of the display object and a picture of the display object; and the target condition comprises at least one of the following: the resource link does not exist, the word number of the description text is less than a predetermined word number threshold, and a picture format of the picture is a target format.

According to a first example of the first aspect, in a third example of the first aspect, displaying the prompt information for the target video comprises:
displaying the prompt information in a sub-region of the target video, wherein the sub-region comprises one of the following: a blank sub-region and a background image sub-region.

Based on the second example of the first aspect, in a fourth example of the first aspect, the prompt information comprises at least one piece of prompt sub-information, each type of the description sub-information corresponds to one piece of prompt sub-information, and displaying the prompt information for the target video comprises:
displaying the prompt sub-information corresponding to each of the at least one type of description sub-information.

Based on the fourth example of the first aspect, in a fifth example of the first aspect, the target condition comprises target sub-conditions respectively corresponding to respective pieces of the description sub-information, and the method further comprises:
receiving an operation instruction for a target operation control, wherein the target operation control is an operation control displayed for the prompt information;
in response to the operation instruction, displaying a video publication interface, the video publication interface comprising: an input region for each type of the description sub-information, the prompt sub-information corresponding to each type of the description sub-information and editing requirement information corresponding to each type of the description sub-information, the editing requirement information being configured to reflect the target sub-conditions corresponding to the description sub-information.

Based on the fifth example of the first aspect, in a sixth example of the first aspect, there are a plurality of operation controls, and each of the operation controls corresponds to one piece of the prompt sub-information.

Based on the sixth example of the first aspect, in a seventh example of the first aspect, the video publication interface comprises:
displaying the video publication interface, and taking a target input region in the video publication interface as an editing region, the target input region being an input region for description sub-information corresponding to the target operation control.

Based on the fifth to seventh examples of the first aspect, in an eighth example of the first aspect, the method further comprises:
receiving the description information that is input into the input region;
in response to a determination that the description sub-information does not satisfy the corresponding target sub-condition, updating a display state of prompt sub-information corresponding to the description sub-information.

Based on the fifth to seventh examples of the first aspect, in a ninth example of the first aspect, the video publication interface further comprises a playback region for the target video, and displaying the video publication interface comprises:
playing the target video in the playback region, wherein the playback region comprises a playback control component, and the playback control component is configured to control playback of the target video.

Based on the fifth to seventh examples of the first aspect, in a tenth example of the first aspect, the method further comprises:
receiving a playback binding operation for bound description information in the video publication interface, wherein the bound description information is any piece of the description sub-information; and
in response to the playback binding operation, establishing a correspondence between a target playback fragment of the target video and the bound description information, so as to play the target playback fragment in response to an operation instruction for the bound description information.

In a first example of the second aspect, an apparatus for prompting is provided, where the apparatus comprises:
a condition determining module configured to determine whether target description information of a target video satisfies a target condition; and
a prompt information displaying module configured to display prompt information for the target video, in response to a determination that the target description information satisfies the target condition, the prompt information being configured to prompt editing of the target description information.

Based on the first example of the second aspect, in a second example of the second aspect, the target description information comprises at least one type of description sub-information as follows: a resource link of a display object in the target video, a description text of the display object and a picture of the display object; and the target condition comprises at least one of the following: the resource link does not exist, the word number of the description text is less than a predetermined word number threshold, and a picture format of the picture is a target format.

Based on the first example of the second aspect, in a third example of the second aspect, the prompt information displaying module is further configured to:
display the prompt information in a sub-region of the target video, wherein the sub-region comprises one of the following: a blank sub-region and a background image sub-region.

Based on the second example of the second aspect, in a fourth example of the second aspect, the prompt information comprises at least one piece of prompt sub-information, each type of the description sub-information corresponds to one piece of prompt sub-information, and the prompt information displaying module is further configured to:
display the prompt sub-information corresponding to each of the at least one type of description sub-information.

Based on the fourth example of the second aspect, in a fifth example of the second aspect, the target condition comprises target sub-conditions respectively corresponding to respective pieces of the description sub-information, and the apparatus further comprises:
an operation instruction receiving module configured to receive an operation instruction for a target operation control, wherein the target operation control is an operation control displayed for the prompt information; and
a video publication interface displaying module configured to display a video publication interface in response to the operation instruction, the video publication interface comprising: an input region for each type of the description sub-information, the prompt sub-information corresponding to each type of the description sub-information and editing requirement information corresponding to each type of the description sub-information, the editing requirement information being configured to reflect the target sub-conditions corresponding to the description sub-information.

According to a fifth example of the second aspect, in a sixth example of the second aspect, there are a plurality of operation controls, and each of the plurality of operation controls corresponds to one piece of the prompt sub-information.

Based on the sixth example of the second aspect, in a seventh example of the second aspect, the video publication interface displaying module is further configured to:
display the video publication interface, and take a target input region in the video publication interface as an editing region, the target input region being an input region for description sub-information corresponding to the target operation control.

Based on the fifth to seventh examples of the second aspect, in an eighth example of the second aspect, the apparatus further comprises:
a description sub-information receiving module configured to receive description sub-information input into the input region.
a displaying ending module configured to update a display state of prompt sub-information corresponding to the description sub-information when the description sub-information does not satisfy the corresponding target sub-condition.

Based on the fifth to seventh examples of the second aspect, in a ninth example of the second aspect, the video publication interface further comprises a playback region of the target video, and the video publication interface displaying module is further configured to:
play the target video in the playback region, wherein the playback region comprises a playback control component, and the playback control component is configured to control playback of the target video.

Based on the fifth to seventh examples of the second aspect, in a tenth example of the second aspect, the apparatus further comprises:
a binding operation receiving module configured to receive a playback binding operation for bound description information in the video publication interface, the bound description information being any piece of the description sub-information.
a correlation establishment module configured to establish, in response to the playback binding operation, a correspondence between a target playback fragment of the target video and the bound description information, so as to play the target playback fragment in response to an operation instruction for the bound description information.

According to a third aspect, according to one or more embodiments of the present disclosure, there is provided an electronic device, comprising: at least one processor and a memory;
the memory stores a computer execution instruction; and
the at least one processor executes a computer execution instruction stored in the memory, so that the electronic device implements the method according to any of the first aspects.

According to a fourth aspect, according to one or more embodiments of the present disclosure, there is provided a computer readable storage medium. The computer readable storage medium stores a computer execution instruction. When a processor executes the computer execution instruction, the method according to any of the first aspects is implemented.

In a fifth aspect, according to one or more embodiments of the present disclosure, there is provided a computer program, where the computer program is configured to implement the method according to any of the first aspects.

According to a sixth aspect, according to one or more embodiments of the present disclosure, there is provided a computer program product comprising a computer program, wherein the computer program implements the method according to any of the first aspects when being executed by a processor.

The above description is only embodiments of this disclosure and an explanation of the technical principles used. Those skilled in the art should understand that the scope of the disclosure involved in this disclosure is not limited to technical solutions composed of specific combinations of the above technical features, but should also covers other technical solutions formed by arbitrary combinations of the above technical features or their equivalent features without departing from the above disclosure concept. For example, technical solutions formed by replacing the above features with (but not limited to) technical features with similar functions disclosed in this disclosure.

In addition, although a plurality of operations are depicted in a specific order, this should not be understood as requiring these operations to be performed in the specific order shown or in a sequential order. In certain environments, multitasking and parallel processing may be advantageous. Similarly, although a plurality of implementation details are included in the above discussion, these should not be construed as limiting the scope of the present disclosure. Some features described in the context of individual embodiments can also be implemented in combination in a single embodiment. Conversely, a plurality of features described in the context of a single embodiment can also be implemented in a plurality of embodiments separately or in any suitable sub-combination.

Although the subject matter has been described in language specific to structural features and/or methodological logical actions, it should be understood that the subject matter defined in the appended claims is not necessarily limited to the specific features or actions described above. On the contrary, the specific features and actions described above are merely example forms of implementing the claims.

## Claims

1. A method for prompting, comprising:
determining whether target description information of a target video satisfies a target condition; and
in response to a determination that the target description information satisfies the target condition, displaying prompt information for the target video, the prompt information being configured to prompt editing of the target description information.

2. The method of claim 1, wherein the target description information comprises at least one type of description sub-information: a resource link of a display object in the target video, a description text of the display object and a picture of the display object; and the target condition comprises at least one of: the resource link does not exist, the word number of the description text is less than a predetermined word number threshold, and a picture format of the picture is a target format.

3. The method of claim 1 or 2, wherein displaying the prompt information for the target video comprises:
displaying the prompt information in a sub-region of the target video, wherein the sub-region comprises one of the following: a blank sub-region and a background image sub-region.

4. The method of claim 2, wherein the prompt information comprises at least one piece of prompt sub-information, each type of the description sub-information corresponds to one piece of prompt sub-information, and displaying the prompt information for the target video comprises:
displaying the prompt sub-information corresponding to each of the at least one type of description sub-information.

5. The method of claim 4, wherein the target condition comprises target sub-conditions respectively corresponding to respective pieces of the description sub-information, and the method further comprises:
receiving an operation instruction for a target operation control, wherein the target operation control is an operation control displayed for the prompt information, and
in response to the operation instruction, displaying a video publication interface, the video publication interface comprising: an input region for each type of the description sub-information, the prompt sub-information corresponding to each type of the description sub-information and editing requirement information corresponding to each type of the description sub-information, the editing requirement information being configured to reflect the target sub-conditions corresponding to the description sub-information.

6. The method of claim 5, wherein there are a plurality of the operation controls, and each of the operation controls corresponds to one piece of the prompt sub-information.

7. The method of claim 5 or 6, wherein displaying the video publication interface comprises:
displaying the video publication interface, and taking a target input region in the video publication interface as an editing region, the target input region being an input region for description sub-information corresponding to the target operation control.

8. The method of any one of claims 5 to 7, wherein the method further comprises:
receiving the description information that is input into the input region; and
in response to a determination that the description sub-information does not satisfy the corresponding target sub-condition, updating a display state of prompt sub-information corresponding to the description sub-information.

9. The method of any of claims 5 to 8, wherein the video publication interface further comprises a playback region for the target video, and displaying the video publication interface comprises:
playing the target video in the playback region, wherein the playback region comprises a playback control component, the playback control component being configured to control playback of the target video.

10. The method of any of claims 5 to 9, wherein the method further comprises:
receiving a playback binding operation for bound description information in the video publication interface, the bound description information being any piece of the description sub-information; and
in response to the playback binding operation, establishing a correspondence between a target playback fragment of the target video and the bound description information, so as to play the target playback fragment in response to an operation instruction for the bound description information.

11. An apparatus for prompting, comprising:
a condition determining module, being configured to determine whether target description information of a target video satisfies a target condition; and
a prompt information displaying module, being configured to display prompt information for the target video, in response to a determination that the target description information satisfies the target condition, the prompt information being configured to prompt editing of the target description information.

12. An electronic device, comprising: at least one processor and a memory;
the memory stores a computer execution instruction; and
the at least one processor executes the computer execution instruction stored in the memory, so that the electronic device implements the method of any of claims 1 to 10.

13. A computer readable storage medium, wherein, the computer readable storage medium stores a computer execution instruction therein, when executing the computer execution instruction, the processor implements a method of any of claims 1 to 10.

14. A computer program for implementing a method of any of claims 1 to 10.

15. A computer program product, comprising a computer program, wherein when being executed by a processor, the computer program implements a method of any of claims 1 to 10.
